# EUROPEAN PATENT APPLICATION

(11) **EP 3 910 217 A1**
(43) Date of publication of application: **17.11.2021**
(21) Application number: 20174203.8
(22) Date of filing: 12.05.2020
(51) Int. Cl.: F16K 11/085, E21B 34/00, B01D 29/66, B01D 43/00

(54) **DEVICE CONFIGURED TO CONTROL FLOW, E.G. IN A SUBSEA WATER PROCESSING SYSTEM**

(71) Applicant: National Oilwell Varco Norway AS, 4604 Kristiansand S (NO)
(72) Inventor: Selvig, Karl Erik B., 4306 Dandnes (NO); Van Korven, Wouter, 2840 Holte (DK); Varanko, Yury, 4322 Sandnes (NO)
(74) Representative: Håmsø Patentbyrå AS

(57) **Abstract**

There is described a flow control device for controlling flow in a fluid processing system, a related system, apparatus, and a method. The flow control device (100) comprises: a housing (110) which comprises a plurality of process ports (115a, 115b, 115c, 115d); and at least one selector (120) which is movably disposed inside the housing and is operable by at least one actuator (130) to switch between configurations of the flow control device in use. In at least one of the configurations, the selector may be positioned so that at least one of the plurality of process ports is selected for communicating fluid on one course through the housing through the selected process port and simultaneously communicating fluid on another course through the housing through at least one other of the process ports.

## Description

The present invention relates to fluid flow control, and, in particular to a flow control device for controlling at least one flow of fluid, in particular simultaneous courses for forward and reverse flows, a fluid processing system including the device, and method.

Fluid processing systems may be provided to process fluid. In a water processing system, for example, processing equipment may be applied to obtain an output of processed water of desired characteristics. Equipment for processing the water may include filters, separators, chemical treatment devices, and various components such as piping, valves, pumps, and the like are arranged to operate the equipment and transmit the water through the system in the appropriate manner.

A seabed system for processing seawater for injection into subsea wells is marketed by National Oilwell Varco and is known as SWIT™. The SWIT™ system includes filtering the seawater in parallel through multiple filter housings or banks of housings, to produce sufficient seawater of the right quality for injection into wells. A desired production capacity for such system may for example be in the excess of 10000 barrels of treated water per day.

Implementations of processing systems using conventional components can involve many pipe sections, pipe connections, and many valves. Valves may need to be operated, in many cases, quite frequently, e.g. perhaps 5 or 6 times per hour. Thus, existing solutions may not, at least not conveniently, be deployed subsea, and/or may be inefficient, and/or hard to maintain and/or difficult to operate. Subsea componentry may also be expensive, e.g. because of the requirements of materials, sealing requirements, and constructional configuration to survive the subsea environment.

Valves may not be readily operable or accessible by underwater vehicles, and underwater vehicles can be costly to run.

At least one of the aims of the invention is to obviate or at least mitigate one or more drawbacks of prior art.

According to a first aspect of the invention, there is provided a flow control device for controlling flow in a fluid processing system, the device comprising: a housing which comprises a plurality of process ports; and at least one selector which is movably disposed inside the housing and is operable by at least one actuator to switch between configurations of the flow control device in use; wherein in at least one of the configurations, the selector is positioned so that at least one of the plurality of process ports is selected for communicating fluid on one course through the housing through the selected process port and simultaneously communicating fluid on another course through the housing through at least one other of the process ports.

In this way, the fluid may be communicated on the one course through the housing and on another course through the housing. In a fluids processing system, one process fluid flow may follow the one course and another process fluid flow may follow the other course through the device. Conveniently, "dual" course configuration where the fluid may be communicated on the one course through the housing and simultaneously on another course through the housing, can be obtained upon selection operation of the selector.

The fluid on the one course may be communicated through the selected process port in opposite or the same direction or sense to that communicated through the other process port on the other course. For example, the fluid may be communicated on the one course in reverse or forward flow through the selected process port and simultaneously be communicated on the other course in forward or reverse flow through the other process port.

The flow control device may further comprise the at least one actuator. The selector may be coupled to at least one shaft operable by the actuator. The actuator may thus be operable to move and/or position the selector for switching and/or obtaining different configurations of the device.

The flow control device may further comprise one or more selectors which may be movably disposed inside the housing. The one or more selectors may be independently operable by respective one or more actuators.

The selector may be operable to switch configurations between at least one configuration, e.g. a first configuration, and at least one other configuration, e.g. a second configuration of the device.

In the one configuration, e.g. the first configuration, the selector may be positioned so that the at least one of the plurality of process ports is selected for communicating fluid on one course through the housing, e.g. a first course, through the selected process port and simultaneously communicating fluid on the other course through the housing, e.g. a second course, through the at least one other of the process ports.

The fluid may be distributed on the other course from a chamber inside the housing through several other process ports of the plurality. More specifically, the fluid may be communicated on the other course so as to be distributed through all other process ports which may in other configurations in principle be selectable by the selector, but which may not in this particular configuration be selected. In other configurations, such other process part(s) may be selected by the selector.

In the other configuration, e.g. the second configuration, the selector may be positioned and/or the device may be configured for communicating fluid on a further course, e.g. a third course, through the housing through the plurality of process ports.

Upon moving to the other configuration, e.g. the second configuration, the further course may be established in place of the previously established one and other course. Accordingly, in the other configuration, the selector may be positioned so that none of the selectable process ports may be selected. Fluid may be communicated on the further course through all of the process ports of the housing. References herein to all of the ports may be taken to mean all of the ports which otherwise may be available for selection by a respective selector. [claim 4] The established further flow course may be an only flow course through the housing.

In the other configuration, e.g. the second configuration, the fluid may be distributed in forward flow through the plurality of process ports from a chamber inside the housing, or may be communicated in reverse flow through the plurality of process ports. [claim 5] The process ports may all be used for distributing the fluid from the housing, e.g. to process components through the process ports.

Thus, by way of switching configurations, dual courses through the flow device may be obtainable in one configuration and a single course through the device may be obtainable in the other configuration. Thus, different flow regimes e.g. in a fluid processing system, can be advantageously supported.

The device may also have further configurations obtainable by operation of the selector. For example, further switching of configurations by way of the selector may allow one or more further configurations to be obtained where different selections of at least one process port may be made, wherein "dual flow" communication of fluid through the housing may be obtained through the selected port of the device along one course, and simultaneously through at least one other ports along another course.

The housing may further comprise at least one discharge port for communicating the fluid through the selected process port and further through the discharge port. The housing may further comprise at least one supply port for communicating the fluid through the supply port and the process port(s). Upon selection of the at least one process port, the one course may be established through the housing between the selected process port and the discharge port(s), and the other course may be established through the housing between the supply port(s) and the other process port(s).

The fluid may enter or exit the housing through the selected process port on the one course, and the fluid may exit or enter the housing through the other process port(s) on the other course.

The selector may comprise at least one surface or part for guiding fluid on the one course through the housing. The fluid may be guided along the one course between the selected process port and the discharge port. The selector may comprise at least one surface or part for guiding fluid on the other course through the housing. The fluid may be guided along the other course between the supply port and the other process port(s).

The actuator may preferably be electrically operable, e.g. by remote control. The actuator may comprise at least one electric motor. The actuator and/or motor may be configured to rotate the selector and/or move the selector linearly within the housing, e.g. along the housing.

The device may further comprise one or more selectors which may be independently and/or individually operable. The one or more selectors may be operable by the one or more actuators respectively.

When one or more process ports are selected, part of the selector may be arranged to at least partially define the one course between the selected process port and the discharge port. The one course may comprise a conduit or bore, where the conduit or bore may extend through the selector. Part of the selector may be arranged to at least partially define the other course, or the further course, between the supply port and the other process port(s). The other course or further course may comprise a chamber in the housing, and/or may comprise a region between an outer surface of the selector and the housing, e.g. inner wall thereof. The one course may be provided or defined through the bore or the conduit. The conduit or the bore may have an opening at each end, and when the selector is positioned to obtain the one configuration, e.g. the first configuration, the opening at one end may be aligned with the process port and the opening at the other end may be aligned with the discharge port.

The selector may comprise a body having at least one opening or at least one surface arranged to be aligned with the at least one process port to select the process port. The body may have an opening to align with the discharge port and at least one opening arranged to align with the selected process port.

The selector may comprise a body arranged to define or provide at least one conduit for guiding fluid on the one course through the housing from the selected process port.

The process ports may be spaced apart circumferentially around the housing. The selector may comprise at least one conduit or surface for guiding fluid through the housing from the selected process port. The selector may be operable to align an opening of the conduit selectively with different ones of the process ports upon rotation of the selector into different rotational positions.

Alternatively or in addition, the process ports may be spaced apart in different positions along the housing. In such case, the selector may comprise at least one conduit or surface for guiding fluid on the one course through the housing from the selected process port. A plurality of openings to the conduit may have different positions along the selector and may have different angular positions around the selector for aligning selectively with different process ports in different rotational positions of the selector.

Either or both the selector and the housing may comprise an elongate body, e.g. a cylindrical body.

The selector may be further arranged within the housing for hindering or restricting fluid communication between the supply port and the discharge port and/or between the one course and the other course. Typically, the selector may comprise a body at least part of which may isolate or separate the supply port from the discharge port and/or may isolate or separate the one course and the other course through the housing.

The flow control device may further comprise sealing means providing at least one seal between the selector and an inner surface of the housing for restricting or hindering fluid communication between the fluid on or communicated along the one course and the fluid on or communicated along the other course, e.g. for restricting or hindering fluid communication between the supply port and the discharge port. The selector may be arranged to position the aligning part of the body with respect to the inner surface of the outer housing, and may do so with sealing contact between the body of the selector and the inner surface of the wall.

The seal may operate to restrict or prevent leakage between the forward and reverse flows in the housing. In this way, desired pressure conditions and flow may be obtained through the housing. In some examples however, e.g. depending upon application and/or desired operational conditions, minor fluid leakage between the forward flow and the reverse flow may be tolerated. The sealing means may have a maximum sealing capability or pressure rating of less than 20 bar, less than 10 bar, or less than 5 bar. Materials requirements and tolerances of constructional parts may be relaxed accordingly, which may help with operational compliance and simplify construction.

The selector may comprise a body. The body may comprise or be a cylindrical barrel, or a rod, or another structure. The body may comprise a radial section of the conduit to be aligned with the selected process port. The body may comprise a longitudinal section of the conduit to be aligned with the discharge port. The discharge port may be arranged to align with an end of the body. The discharge port may be arranged to communicate with an interior of the selector through the end of the body.

Any one or more of the selector, the housing, and a shaft coupling the selector to the actuator may have a longitudinal axis, a centre axis, and/or an axis extending end-to-end. The selector and/or the shaft may be movable axially and/or rotationally about the axis by operation of the actuator. Accordingly, the selector or body may be linearly movable in the axial direction and/or may be rotatable about the axis. The selector or the body of the selector may comprise or be an elongate body and/or a cylindrical body having a longitudinal axis and/or axis extending end to end therethrough. The linear movement may be linear translation. The rotation may take place without movement linearly.

The selector or body may further have a radial protruding part to align with the process port. The radial protruding part may comprise the radial section of the conduit. The process port may be arranged to communicate with an interior of the selector through the radial protruding part.

The actuator may be operable to move the selector relative to the housing for either arranging the selected process port in communication with the discharge port or the supply port. Optionally, the selector may be moved to a position in which the process port is not in communication with either of the discharge port and the supply port. In this position, the body of the selector may prevent communication with an interior of the housing through the process port, e.g. by the body blocking or obstructing fluid access to the port.

The process ports may not necessarily be identical in their form or configuration. However, typically they may be arranged to facilitate delivering fluid in parallel into or out of an interior, e.g. a chamber, in the housing.

The supply port may be typically arranged to supply fluid into the interior, e.g. the chamber, of the housing, from which fluid may then, in use, be distributed through the one or more process ports. The process ports may be arranged to distribute the supplied fluid from the chamber through one or more of the process ports for supplying one or more corresponding connected process components,

The discharge port may typically be arranged to discharge fluid which may be returned back through the selected process port when the selector is positioned to allow fluid communication between the selected process port and the discharge port. Thus, in examples where the process ports of the device in use may be connected to respective process components in the form of filtration banks, backwash fluid can be directed from one or more banks through the selected process port(s) and the discharge port of the device, and at the same time, supplied fluid may be distributed from the device through one or more other process ports to the other filtration banks.

Accordingly, the device may be configured so that fluid communication through the housing may be permitted between the supply port and one or more of the process ports, and fluid communication may simultaneously be permitted via the selector between the selected other one or more of the process ports and the discharge port.

In examples, such as for the processing of water, the supplied fluid may comprise water. The water may be filtered in parallel in process components comprising multiple filtration banks. The filtration banks may be supplied with the water through the supply port into the housing of the device, then distributed in the forward fluid flow through the one or more process ports to respective filter housings for filtering the water. If one or more of the filter housings is to be backwashed, the selector may be moved to the position in which the one or more of the process ports in communication with the filter housings to be backwashed may be selected so that fluid communication may be obtained between the selected one or more process ports and the discharge port. Backwash fluid, e.g. comprising some of the filtered water produced from other filter housings, can then be drawn back through the selected process port on the one course and delivered into a backwash conduit component through the discharge port for discharge. The supply of the other, non-selected, process ports with water to be filtered via the supply port and the chamber in the housing can continue at the same time that the selected one or more process ports may be returning fluid on the other course through the discharge port.

In one embodiment, the housing is elongate and the process ports are spaced apart, typically linearly, along the housing, and the selector comprises a plurality of radial openings in different angular positions around an elongate body of the selector and spaced apart along the body. The selector may then be rotatable into different angular positions for aligning different ones of the openings of the selector with corresponding process ports of the housing. Thus, in one angular position, one of the openings of the selector may be aligned with one of the process ports to provide a passageway between the process port and the discharge port. In another angular position which is obtained by further rotation of the selector, another one of the openings along the body may be aligned with another one of the process ports to provide a passageway for fluid communication through the housing between the other process port and the discharge port.

In another embodiment, the process ports may be spaced apart circumferentially around the housing. The inner body can then have typically a radial opening which may be rotatably positioned in alignment with the relevant one of the process ports of the housing to obtain the passageway between the aligned process port and the discharge port. When another one of the process ports may obtain fluid communication with the discharge port, the selector may be further rotated to position the radial opening with the desired other one of the process ports.

The actuator can be operated to rotate the selector to the necessary position, and within one 360 degree turn of the selector, each one of the process ports can obtain communication with the discharge port through the passageway defined by the body of the selector, at least once. The body may also be rotated to at least one position in which none of the process ports of the housing may be in communication through the body with the discharge port.

Typically, the fluid processing system may be a gas and/or liquids processing system, and/or may be a subsea fluid processing system, e.g. a water processing system.

According to a second aspect of the invention, there is provided apparatus or system for processing one or more fluids, the apparatus or system comprising: a plurality of process components; and at least one flow control device in accordance with the first aspect of the invention wherein the plurality of process ports are coupled respectively to the plurality of process components, wherein the selector is operable by at least one actuator to switch between configurations of the apparatus or system; wherein in at least one configuration, the selector is positioned so that at least one of the plurality of process ports is selected for communicating fluid along one course through the housing through the selected process port and simultaneously communicating fluid along another course through the housing through at least one other of the process ports.

The apparatus may be for processing water by filtration. The process components may comprise filtration banks, elements, or modules which may be coupled respectively to the process ports of the flow control device, e.g. to perform filtering in parallel. The filter housings may comprise one or more filter elements. The filter elements may comprise dead end filters. The filter elements may comprise microfiltration or ultrafiltration elements for microfiltration or ultrafiltration of water. The water may be seawater. The apparatus may be configured to be deployed on the seabed. The apparatus may be deployed underwater.

The apparatus or system may have a backwash mode in which the selector may be positioned to select at least one of the process ports to communicate fluid through the housing of the device on the one course through the selected process port(s) for communicating backwash fluid from at least one of the filtration banks through the housing and away from the device, and for simultaneously communicating fluid, e.g. fluid to be filtered, on the other course through one or more other process ports toward respective process components.

The flow control device may further comprise at least one discharge port and the apparatus or system may further comprise at least one discharge pipe for discharging backwash fluid from the discharge port.

The system or apparatus may further comprise at least one supply component which may be coupled to at least one supply port of the housing of the flow control device. The supply component may comprise at least one supply conduit for supplying the fluid to be processed from a source.

The filter housings or banks of filter housings may be coupled to respective process ports through connecting pipe or pipeline. The apparatus may comprise filtration banks comprising a plurality of filter housings, each which may comprise filter elements which may comprise filter membranes. Different banks of filter housings may be connected respectively to different process ports, e.g. through suitable pipework or conduits.

According to a third aspect of the invention, there is provided a method of processing fluid and controlling fluid flow, e.g. for facilitating selective cleaning of one or more process components, the method comprising the steps of: providing at least one flow control device in accordance with the first aspect of the invention, wherein a plurality of process components are coupled respectively to the plurality of process ports of the flow control device; operating the selector using the actuator, selecting at least one of the plurality of process ports; and communicating fluid along one course through the housing of the flow control device through the selected process port, and simultaneously communicating fluid along another course through the housing of the flow control device through at least one other of the process ports.

The method may include switching the configuration of the flow control device by operating the selector. The switching between the configurations of the flow control device may switch configurations of the system, e.g. between a configuration for cleaning and another configuration.

The method may include cleaning at least one process component(s) which may be coupled to the selected process port. The cleaning may be performed using cleaning fluid. The method may further comprise and communicating the cleaning fluid in the one flow course through the housing and away from the housing.

Fluid may be communicated in the one flow course in forward or reverse flow through the selected process port(s). Fluid may be communicated in the other flow course in forward or reverse flow through the other process port(s).

The cleaning may be performed by backwashing. The cleaning fluid may comprise backwash fluid. The fluid, e.g. cleaning fluid, and/or the fluid communicated on the one course, the other course, and/or the further course flow may comprise water.

The method may include using the actuator to operate the flow control device to select the process port, and thereby upon selection of the process port may selectively backwash at least one of the filter housing or filtration bank which may be coupled to the selected port. The actuator may comprise a motor, e.g. hydraulic or electrically operable motor. The actuator may be operable by remote operation or communication or may be operated according to a predefined program, e.g. computer program, e.g. stored on a computer device. Instructions from the computer device may be transmitted to operate the actuator automatically according to the instructions of the program. The method may thus include transmitting at least one signal to operate the actuator.

The device may simultaneously permit feed water through into the process components through the supply port into the interior of the housing and out of the interior of the housing through the process ports. The process components may comprise filtration banks for filtering and producing filtrate water. The method may include using the actuator to move the selector in the housing of the device to switch a selected process port from one configuration of the device in which the process port may be engaged to transmit fluid onward toward the process component coupled to the selected port to another configuration in which that process port may be engaged instead to communicate fluid from the process component coupled to that port through the housing through the discharge port.

Any of the aspects of the invention may have one or more further features as set out in relation to any other aspect wherever described herein.

Various embodiments can be advantageous in that the flow control device can allow to run one or more flow regime(s) simultaneously, e.g. normal flow distribution between one or more process module(s) and the possibility of having at least one process module being in reverse flow regime (backwash). The device can operate both the feed and the discharge side in one single device simultaneously.

Embodiments of the invention may be advantageous in various ways as will be further apparent from throughout the specification herein.

The various aspects of the invention will now be described, by way of example only, with reference to the accompanying drawings, of which:
- Figure 1: is a schematic representation of water processing apparatus in one example;
- Figure 2: is a side-sectional representation of a flow control device for the water processing apparatus of Figure 1;
- Figure 3: is a perspective representation of the flow control device of Figure 2;
- Figure 4: is a schematic representation of water processing apparatus in another example;
- Figure 5: is a side-sectional representation of a flow control device for the water processing apparatus of Figure 4;
- Figure 6: is a perspective representation of the flow control device of Figure 5; and
- Figure 7: is a side-view representation of another flow control device.

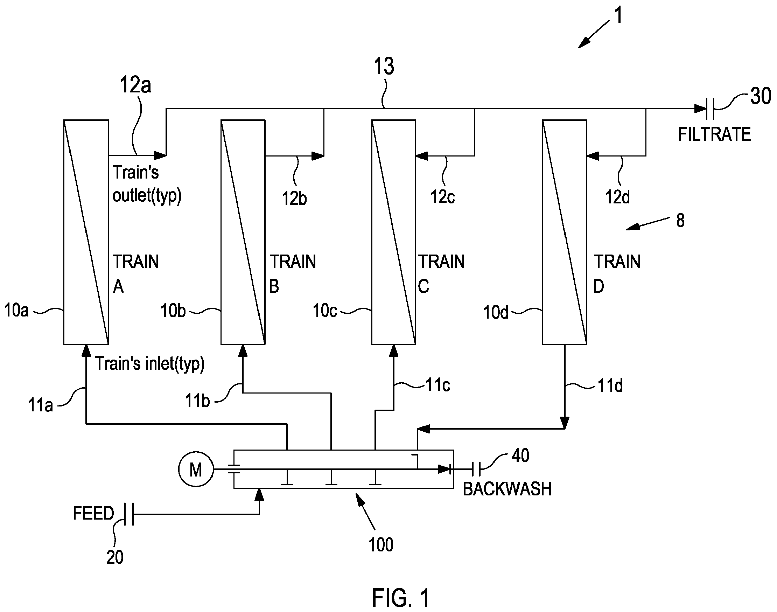

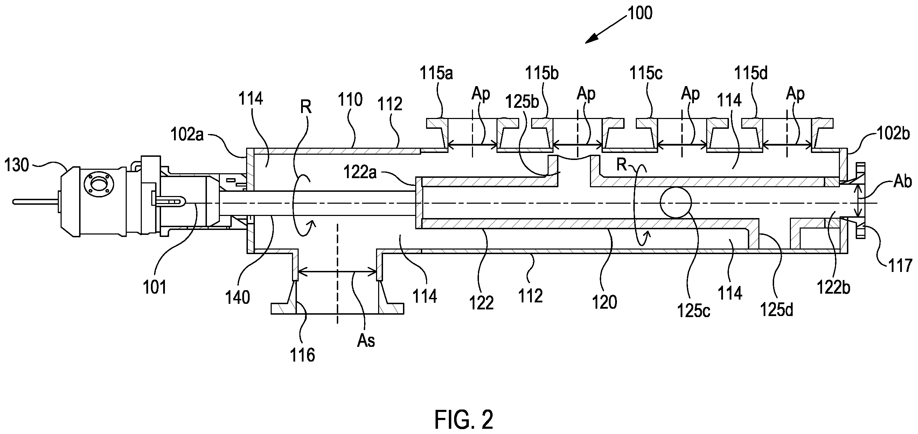

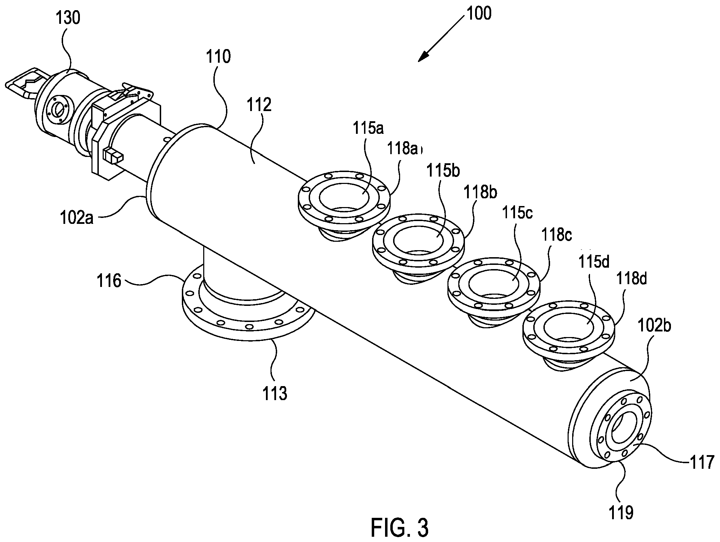

Referring to Figures 1 to 3, water processing apparatus 1 includes a flow control device 100 for facilitating fluid communication between a supply pipe 20 and a plurality of process components, in this example, process components comprising four water filtration banks 10a-10d. The banks 10a-10d are parallel connected to the flow control device 100 through connecting pipelines 11a-11d. The flow control device 100 further facilitates fluid communication between at least one of the water filtration banks 10a-10d and a discharge outlet comprising a discharge pipe 40 for backwash fluid.

Water to be filtered can be directed from the supply pipe 20 through the flow control device 100 into each of the banks 10a-10d. The water can be distributed from the flow control device 100 into the respective lines 11a-11d to direct the water into the banks 10a-10d.

Pipelines 12a-12d connect the banks 10a-10d to a common production pipe 13 for transmitting filtered water for delivery of filtered water to filtrate recipient 30.

The water is filtered in the filtration banks by filter elements arranged in filter housings. The filter elements operate to remove particles above a certain size from the water. The water passes through the filter element. The particles are deposited as residue on surface(s) of the filter elements. From time to time, backwashing is carried out to clean at least some of the filter elements. The backwashing process is performed to remove deposited particles from the filter elements by transmitting "backwash fluid" through the filter housing(s) in an opposite direction to that when operating the filters in filter duty.

In Figure 1, the filtration bank 10d is in backwash configuration. The flow control device 100 is configured to be operable to selectively obtain fluid communication through the control device between the connecting pipe 11d of bank 10d and the backwash pipe 40. A portion of the filtrate in the common delivery pipe 13 is then drawn through the pipe 12d into the filtration bank 10d and onward through the flow control device 100 to the backwash pipe 40 for discharging the backwash fluid. The backwash fluid carries removed residue or particles removed from the filters in the filtration bank 10d.

The flow control device 100 is of particular interest herein and provides a convenient means of selecting an individual filtration bank and switching the filtration bank from filter mode to backwash mode and vice versa. Any one of the banks may be chosen and may be switched to backwash at particular time. For instance, the banks 10a-10d can be cleaned by backwashing in sequence, one at a time, until a cycle has been completed where each has been backwashed and is clean.

The flow control device 100 comprises an outer, housing 110 and an inner, selector 120 which is movable inside the housing 110. The flow control device 100 further comprises an actuator 130 which is connected to the selector 120. The actuator 130 is operable to move the selector 120 relative to the outer housing 110, which as will be described further, permits the selection of process ports and when employed in the example of Figure 1, can allow a filtration bank to be switched to backwash mode.

The housing 110 has a cylindrical body, extending longitudinally between first and second ends 102a, 102b. A longitudinal axis 101 extends centrally end to end through the cylindrical body of the housing. The interior of the cylindrical body 112 comprises a chamber 114 which is arranged to contain fluid, e.g. water.

The housing 110 has four process ports 115a-115d for connection to the respective filtration units 10a-10d for distributing fluid from the flow control device to the filtration units. The housing has one supply port 116 for connection to the supply pipe 20 for supplying fluid from the supply pipe into an interior of the housing of the flow control device 100. The housing has one discharge port 117 for connection to the discharge pipe 40 for delivering fluid in communication from a selected process port of the selector to the discharge pipe.

The process ports 115a-115d have apertures Ap through the wall of the cylindrical body 112 of the housing. The supply port 116 has an aperture As through the wall of the cylindrical body 112, on an opposite side of the housing to the process ports 115a-115d. The discharge port 117 has an aperture Ab through an end wall of the body 112.

The aperture Ap has a greater flow area than aperture Ab. The aperture As has a greater flow area than the aperture Ap.

Radial pipe stubs 118a-118d protrude radially from an outer surface of the housing 112 for facilitating connection of the ports 115a-115d. The pipe stubs 118a-118d are each provided with a flange for facilitating connection with an adjoining flange of a pipeline or other tubular component. By way of the flanges, the four ports 115a-115b can be connected for example to pipelines 11a-121d which in turn can connect to the respective filtration banks 10a-10d.

The process ports 115a-115d are linearly spaced apart along one side of the outer housing 112.

The selector 120 is arranged inside the housing 110 so as to be rotatably movable between different positions. More specifically, the selector 120 is movable by actuation of the actuator 130 to select one of the process ports 115a-115d and obtain fluid communication through the housing 110 through the selected port 115d and the discharge port 117. When the selected process port 115d is connected to the discharge port 117, the device provides fluid communication between the two ports 115d, 117 through the selector 120. When moved to another position the selected process port 115d no longer is in communication with the discharge port 117, and is arranged instead to distribute supplied fluid together with one or more others of the ports 115a-115c out of the chamber 114 of the housing 110 to the connecting pipes 11 a-11 d.

In order to provide this functionality, in this example the selector 120 comprises a body in the form of a hollow rod 122 arranged inside the housing 110. The rod 122 has a closed end 122a and an open end 122b, and a longitudinal bore 123 extending internally in the rod from the open end 122b toward the closed end 122a. The rod 122 is arranged centrally within a cylindrical outer body 112 of the housing 110 and has a long axis that is coincident with the long axis 101 of the body 112 of the housing 110 and is an axis of rotation of the rod. Radial openings 125a-125d in the wall of the rod 122 are spaced longitudinally apart in positions corresponding to the longitudinal spacing of the process ports 115a-115d of the outer housing 110.

Fluid in the chamber 114 can be contained in regions between an outer surface 127 of the rod 122 and an inner surface of the body 112 of the housing 110.

The radial openings 125a-125d are distributed apart from one another in different angular positions about the longitudinal axis of rotation of the rod.

Different openings 125a-125d of the rod 122 are arranged to align with the corresponding ports 115a-115d of the housing 110 in different rotational positions of the rod. When one of the openings of the rod and a selected one of the process ports of the housing is aligned, then communication of fluid is permitted through between the selected process port and the interior of the rod 122. Furthermore, the open end 122b of the rod 122 remains aligned and in communication with the discharge port 117 in all rotational positions. Thus, when a selected port of the housing 110 and an opening of the rod 122 are aligned, then the fluid communication is possible through the inside of the rod 122 between the selected process port 115d and the discharge port 117, for thereby putting the filtration bank 10d into backwash mode. When one opening 125a-125d is aligned with its corresponding port 115a-115d of the housing 110, the others are not in alignment, and do not communicate fluid through the interior of the rod 122. The other process ports 115a-115c remain however in communication with the chamber 114 and can communicate supplied fluid from supply port 116 through the chamber 114 of the housing 110 for distributing the supplied fluid into the pipes 11a-11c. The rod 122 and shaft 140 are rotatable as indicated by the arrows R. Thus, in this configuration where the port is selected, dual simultaneously flow courses may be provided through the housing, typically reverse flow through the selected flow process port to the discharge port and forward flow from the chamber through the other process ports.

It can be noted also that in at least one rotational position, none of the openings 125a-125d of the rod 122 are aligned with any of the ports 115a-115d. This may correspond to an operational configuration where none of the filtration units 10a-10d are to operate in backwash, i.e. all of the units 10a-10d connected to the device 100 are being used for filtration duty. Thus, the device provides for further configuration where a single course is provided through the housing through all of the available process ports.

In one 360 degree turn of the rod, each of the openings 125a-125d of the rod 122 is aligned once with its corresponding port 115a-115d of the housing 110. In that 360 degree turn, at least one position is obtained where none of the openings is aligned with any of the ports 115a-115d. All ports 115a-115d may then be used to distribute fluid from the chamber 114 into the connected equipment, e.g. filtration banks. The rod 122 is then inactive.

It can thus be appreciated that operation of the actuator 130 to progress the rotation of the rod 112 through a 360-degree turn allows a full cycle of backwash, and in that in turn one port 115a-115d (and corresponding filtration bank 10a-10d) is connected at a time, and each one is connected once. The sequence is determined by the angular positions of the openings 125a-125 of the rod 122. The actuator 130 can conveniently be operated using an ROV or remote operation, e.g. by hydraulic operation, electric operation and/or sending a signal from a topside control system to a subsea control system.

The rod 122 at the open end of the rod 122 bears against a first end wall of the cylindrical body 112. At the closed end of the rod, the rod 122 is attached to the shaft 140 which extends through the other, second end wall of the cylindrical body 112 of the housing 110. Suitable bearings and seals are provided between the shaft 140 and the end portion of the housing 110 to prevent fluid ingress when in use subsea.

The openings 125 of the rod 122 are openings in a radially protruding member extending radially from the rod. The radial part has a radial section of passageway extending radially from a longitudinal section of passageway of the main bore of the rod 122. When aligned with a selected one of the process ports 115a-115d, the outer end of the protruding member closes circumferentially around the selected process port 115. However, supplied fluid that is contained in the chamber 114 and is to be distributed to the filtration units for filtration which in operation at higher pressure in the application of Figure 1, can in practice enter through the seal into the conduit within the rod 122 and be transmitted through the discharge port 117. Thus, there can be some loss of feed fluid, which bypasses process modules. However, tolerances of components can be relaxed yet still reach the necessary performance characteristics for high capacity filtration in parallel. This may advantageously reduce manufacturing and design burden, and may facilitate cost effective deployment and design and may ease controllability of the device when subsea.

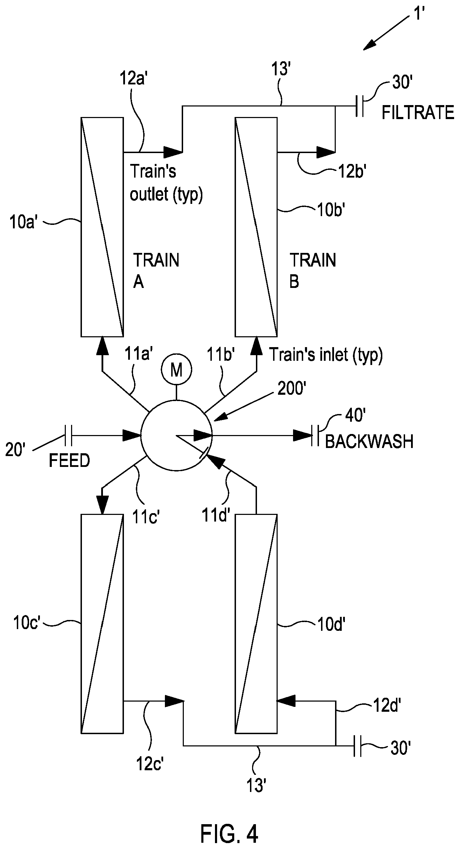

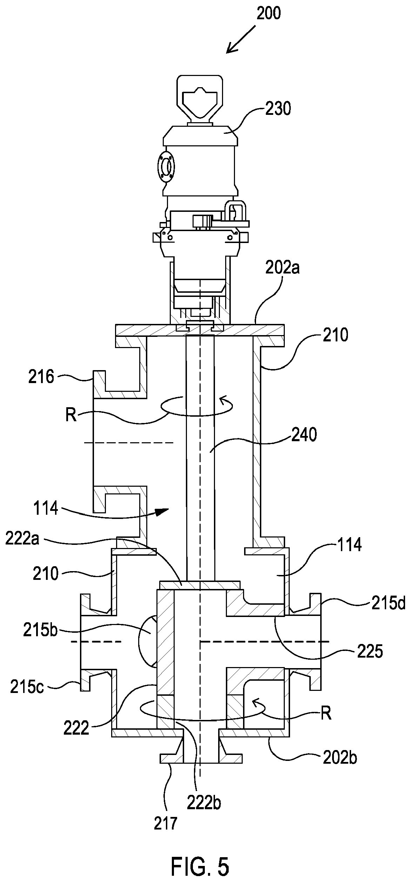

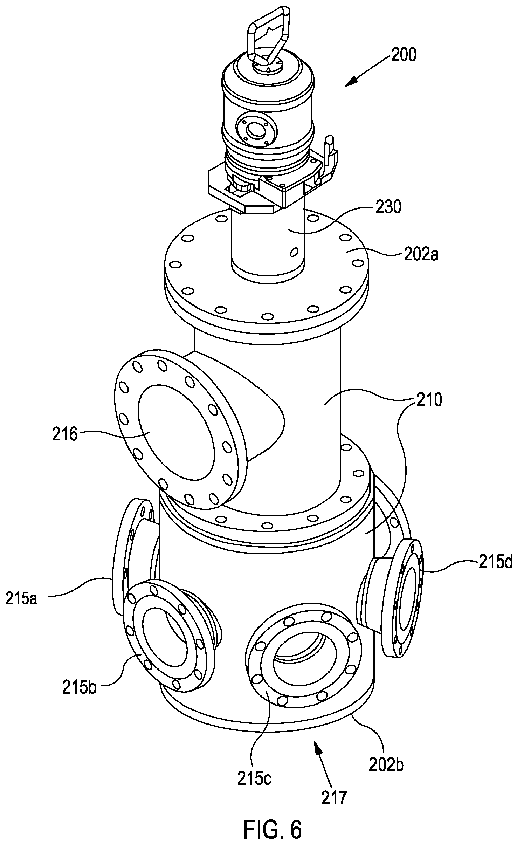

In Figures 4 to 6, the flow control device 200 has a different design. Corresponding features to those described above in relation to Figures 1 to 3 have the same numerals incremented by one hundred. In this example, the selector 220 has a body comprising an internal L-conduit or bend. The body has a bore extending longitudinally forming a section of the conduit which is aligned with the discharge port 217 and a bore extending radially forming a section of the passageway with an opening to align with selected one of the process ports 215a -215d of the outer housing 210 by appropriate rotational positioning of the selector. The ports in the outer housing 215 to 215d are spaced apart circumferentially about a cylindrical body 212 of the housing 210. By rotating the selector 220, the radial opening 225 is movable around the long axis 201 and can align with the desired, selected process port to be connected with discharge port 217.

When aligned with the selected one of the process ports 215a-215d, communication through the housing 210 and through that process port and the discharge 217 is obtained.

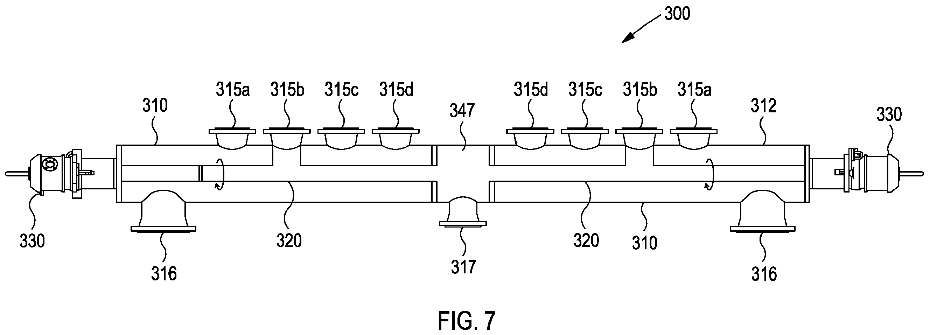

In Figure 7, another flow control device 300 is depicted. Corresponding features to those described in the example of Figures 1 to 3 have the same numerals incremented by two hundred. The device 300 in this example is generally similar to the example of Figures 1 to 3, but has instead two selectors 320 arranged within the housing 310 which are independently operable by separate operation of the actuators 330. The selectors are operated respectively by two actuators 330 one at each end of the housing. In this case a common discharge port 317 is positioned in an intermediate location between ends. In other variants, there may be two, e.g. one for each selector. When the port 315b is selected as shown, fluid communication is provided through the port 315b through the common region 347 and through the discharge port 317.

Process ports 315a-315d are distributed linearly spaced apart along one side of the body 312 of the housing 310, but in general may be positioned in other angular positions, and the set of process ports associated with the one selector may be provided in different configuration to those associated with the other selector. The selectors 320 are rotated to select one or more of the ports for communication with the discharge port 317.

It will be appreciated that the term supply port and discharge port has been used as labels for convenience of understanding. Of course, the flow control devices described can be used with flow in the opposite sense, that is, so that the discharge port could be used for supply and so that the supply port could be used for discharge. Conceivably also, both the supply port and the discharge port can be provided for supply or alternatively discharge depending on the process concerned. However, an advantage of using the selector and selecting a port to connect with the discharge port, can be that it may allow two separate flows to take place through the device.

## Claims

1. A flow control device for controlling flow in a fluid processing system, the device comprising:
a housing which comprises a plurality of process ports; and
at least one selector which is movably disposed inside the housing and is operable by at least one actuator to switch between configurations of the flow control device in use;
wherein in at least one of the configurations, the selector is positioned so that at least one of the plurality of process ports is selected for communicating fluid on one course through the housing through the selected process port and simultaneously communicating fluid on another course through the housing through at least one other of the process ports.

2. A flow control device as claimed in claim 1, further comprising at least one actuator, wherein the selector is coupled to at least one shaft operable by the actuator.

3. A flow control device as claimed in claim 1 or 2, further comprising one or more selectors which are movably disposed inside the housing and are independently operable by respective one or more actuators.

4. A flow control device as claimed in any preceding claim, wherein the selector is operable to switch between first and second configurations the device;
wherein in the first configuration, the selector is positioned so that the at least one of the plurality of process ports is selected for communicating fluid on the one course through the housing through the selected process port and simultaneously communicating fluid on the other course through the housing through the at least one other of the process ports; and
wherein in the second configuration, the device is configured for communicating fluid on a further course through the housing through the plurality of process ports, the further course being an only flow course or being established in place of the one and the other course of the first configuration.

5. A flow control device as claimed in claim 4, wherein in the second configuration, the selector is positioned so that the flow control device is operable for distributing fluid through all of the plurality of process ports from a chamber inside the housing.

6. A flow control device as claimed in any preceding claim, wherein the housing further comprises:
at least one discharge port for communicating the fluid on the one course through the selected process port and further through the discharge port; and
at least one supply port for communicating the fluid on the other course through the supply port and the process port(s),
wherein the one course may be established through the housing between the selected process port and the discharge port(s), and the other course may be established through the housing between the supply port(s) and the other process port(s).

7. A flow control device as claimed in any preceding claim, wherein the selector comprises at least one surface or part for guiding fluid on the one course through the housing.

8. A flow control device as claimed in any preceding claim, wherein the other course comprises a chamber in the housing, the chamber comprising a region between an outer surface of the selector and the housing.

9. A flow control device as claimed in any preceding claim, wherein any one or more of the selector, the housing, and a shaft coupling the selector to the actuator has a longitudinal axis, a centre axis, and/or an axis extending end-to-end, and the selector is movable axially and/or rotationally about the axis by operation of the actuator.

10. A flow control device as claimed in any preceding claim, wherein the selector comprises a body having at least one opening or at least one surface arranged to be aligned with the at least one process port to select the process port.

11. A flow control device as claimed in any preceding claim, wherein the selector comprises a body arranged to define or provide at least one conduit for guiding fluid on the one course through the housing from the selected process port.

12. A flow control device as claimed in any preceding claim, further comprising sealing means providing at least one seal between the selector and an inner surface of the housing for restricting or hindering fluid communication between the fluid on the one course and the fluid on the other course.

13. A flow control device as claimed in claim 12, wherein the sealing means is configured to provide sealing therebetween with maximum pressure rating of less than 5 bar, for example 1 bar or less.

14. A flow control device as claimed in any preceding claim, wherein the process ports are spaced apart circumferentially around the housing, and the selector comprises at least one at least one conduit or surface for guiding fluid through the housing from the selected process port, the selector being operable to align an opening of the conduit selectively with different ones of the process ports upon rotation of the selector into different rotational positions.

15. A flow control device as claimed in any preceding claim, wherein the process ports are spaced apart in different positions along the housing, and the selector comprises: at least one conduit or surface for guiding fluid on the one course through the housing from the selected process port; and plurality of openings to the conduit, the openings having different positions along the selector and different angular positions around the selector for aligning selectively with different process ports in different rotational positions of the selector.

16. Apparatus or system for processing one or more fluids, the apparatus or system comprising:
a plurality of process components; and
at least one flow control device in accordance with any preceding claim, wherein the plurality of process ports are coupled respectively to the plurality of process components, wherein the selector is operable by at least one actuator to switch between configurations of the apparatus or system;
wherein in at least one configuration, the selector is positioned so that at least one of the plurality of process ports is selected for communicating fluid along one course through the housing through the selected process port and simultaneously communicating fluid along another course through the housing through at least one other of the process ports.

17. Apparatus or system as claimed in claim 16, wherein the process components comprise filtration banks, elements or modules coupled respectively to the process ports of the flow control device, the apparatus or system having a backwash mode in which the selector is positioned to select at least one of the process ports to communicate fluid through the housing of the device on the one course through the selected process port(s) for communicating backwash fluid from at least one of the filtration banks through the housing and away from the device, and simultaneously on the other course for distributing fluid in forward flow through one or more other process ports toward respective process components.

18. Apparatus or system as claimed in claim 17, wherein the flow control device further comprises at least one discharge port and the apparatus or system further comprises at least one discharge pipe for discharging backwash fluid from the discharge port.

19. A method of processing fluid and controlling fluid flow, e.g. for facilitating selective cleaning of one or more process components, the method comprising the steps of:
providing at least one flow control device in accordance with the first aspect of the invention, wherein a plurality of process components are coupled respectively to the plurality of process ports of the flow control device;
operating the selector using the actuator, selecting at least one of the plurality of process ports; and
communicating fluid along one course through the housing of the flow control device through the selected process port, and simultaneously communicating fluid along another course through the housing of the flow control device through at least one other of the process ports.

20. A method as claimed in claim 19, which further comprises:
cleaning at least one process component(s) coupled to the selected process port using cleaning fluid; and
communicating the cleaning fluid in the one flow course through the housing and away from the housing;
wherein the cleaning is performed by backwashing, and the cleaning fluid comprises backwash fluid comprising water.
